(19) Europäisches Patentamt / European Patent Office / Office européen des brevets

(11) **EP 3 219 655 B1**

(12) **EUROPEAN PATENT SPECIFICATION**

(45) Date of publication and mention
of the grant of the patent:
**16.10.2019  Bulletin 2019/42**

(51) Int Cl.:
***B66B 5/02*** *(2006.01)*

(21) Application number: **16160154.7**

(22) Date of filing: **14.03.2016**

(54) **METHOD FOR DETERMINING SPEED OF AN ELECTRIC MOTOR, AN ELEVATOR CONTROL UNIT UTILIZING THE METHOD THEREOF AND A COMPUTER PROGRAM PRODUCT**

VERFAHREN ZUR BESTIMMUNG DER GESCHWINDIGKEIT EINES ELEKTROMOTORS, DAS VERFAHREN VERWENDENDE AUFZUGSSTEUERUNGSEINHEIT UND COMPUTERPROGRAMMPRODUKT

PROCÉDÉ DE DÉTERMINATION DE VITESSE D'UN MOTEUR ÉLECTRIQUE, UNITÉ DE COMMANDE D'ASCENSEUR UTILISANT CE PROCÉDÉ ET PRODUIT DE PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.09.2017  Bulletin 2017/38**

(73) Proprietor: **Kone Corporation**
**00330 Helsinki (FI)**

(72) Inventor: **Korhonen, Tuukka**
**00330 HELSINKI (FI)**

(74) Representative: **Berggren Oy, Helsinki & Oulu**
**P.O. Box 16**
**Eteläinen Rautatiekatu 10A**
**00101 Helsinki (FI)**

(56) References cited:
**EP-A1- 1 520 829          CN-B- 101 780 906**
**US-A1- 2009 167 218**

**Description**

TECHNICAL FIELD

The invention concerns in general the technical field of electric motors used in elevators. The invention concerns especially determining the speed of an electric motor of the elevator, such as a hoist motor, in situations in which an elevator car of the elevator requires moving due to halting between two landings or floors.

BACKGROUND

In case of a failure in the operation of the elevator such as due to a power failure in the electrical grid, a failure in the operation of the unit controlling the elevator, a broken safety circuit, or a failure of the battery system, the elevator car may halt between two landings. In this kind of an emergency or a rescue situation, the individuals inside the elevator car become trapped and unable to get out of the elevator car safely without assistance.

In an emergency situation, the elevator car must be moved manually in order to release the individuals trapped inside the elevator car. When the elevator brake is being opened, the unbalance between the counterweight and the elevator car causes the elevator car to move. In elevators without the counterweight, the elevator car starts to descend once the brake has been opened. The operator or maintenance personnel must operate the elevator car by visually monitoring the movement of the car in the elevator shaft, and then manually using the elevator brake in order to control the movement of the car. There is no information about the speed of the car, other than by a visual inspection, available for the operator.

The drawback of the prior art solutions is that the personnel manually operating the elevator car is missing the information about the speed of the car and thus the movement may become uncomfortable or even dangerous for the individuals inside the car. There is also a high risk of damaging the elevator due to the fact that the operator is more or less unaware of the characteristics of the elevator car movement.

Publication US 2009/0167218 A1 presents a method and apparatus for braking a motor. The braking current of the motor is controlled by connecting only the negative changeover contacts of an inverter of a frequency converter or alternatively by connecting only the positive changeover contacts of the inverter of the frequency converter. The arrangement comprises a control, which is arranged to control in a braking situation only the negative changeover contacts of the frequency converter or alternatively only the positive changeover contacts of the frequency converter.

Publication CN 101780906 B presents a self-adaptive control method for elevator emergency operation. During the elevator emergency operation, in the adaptive control method, first, U, V, W phases of a permanent magnet synchronous motor are short-circuited and the elevator brake opened. Then, a central elevator control unit detects currents in two phases of the U, V, W phases. Based on the detected currents, the elevator car running direction and speed are being determined. The speed information is further used to determine whether the elevator car is to be accelerated by backup power supply.

SUMMARY

An objective of the present invention is to present a method for determining a speed of an electric motor, an elevator control unit utilizing the method thereof, and a computer program product. Another objective of the present invention is that the method for determining the speed of the electric motor, such as the rotational speed of a rotor, of an elevator provides speed information for moving the elevator car safely.

The objectives of the invention are reached by a method, an elevator control unit and a computer program product as defined by the respective independent claims.

According to the invention, a method for determining a speed of an electric motor of an elevator according to claim 1 is provided.

The method may comprise forming the effective short-circuit between at least two of the plurality of phases of the electric motor by an electrical drive or a switch.

The method may also comprise forming the effective short-circuit between at least two of the plurality of phases of the electric motor by the switch connected in series with a resistor with a known resistance value so that current flows through the resistor only when the switch is closed.

The method may comprise determining the short-circuit current by a measurement device in the electrical drive.

The method may also comprise determining the short-circuit current by measuring a voltage across the resistor with a known resistance value.

The method may comprise, prior to determining the short-circuit current, magnetizing a rotor of the electric motor.

The method may comprise determining the speed of the electric motor based on a frequency of the short-circuit current.

The method may comprise determining the speed of the electric motor based on the frequency of the short-circuit current by equation

$$N = \frac{f_{\text{I,SC}}}{P},$$

wherein $N$ is the speed of the electric motor, $f_{\text{I,SC}}$ is the frequency of the short-circuit current, $P$ is the number of pole-pairs of the electric motor.

The method may comprise determining the speed of the electric motor based on an amplitude of the short-circuit current.

The method may comprise determining at least one of the following: the amplitude or the frequency of the short-circuit current with the electrical drive. The method may comprise, wherein the electric motor is a surface-mounted permanent magnet motor and the formed effective short-circuit is symmetrical, determining the speed of said motor according to equation

$$N = N_{\text{NOM}} R \frac{I_{\text{SC}}}{\sqrt{\frac{E^2}{3} - I_{\text{SC}}^2 X^2}},$$

wherein $N$ is the speed of said motor, $N_{\text{NOM}}$ is the nominal rotational speed of said motor, $R$ is a winding resistance of said motor, $E$ is the root mean square value of a phase-to-phase back electromotive force of said motor at the nominal rotational speed of said motor, $I_{\text{SC}}$ is the RMS value of the short-circuit current, $X$ is a winding reactance of said motor at the nominal rotational speed of said motor.

The method may comprise determining the speed of the electric motor by an elevator control unit.

According to the invention, an elevator control unit for determining a speed of an electric motor of an elevator according to claim 11 is provided.

According to the invention, a computer program product is provided wherein the computer program product comprises program instructions which when executed by an elevator control unit cause the elevator control unit to perform the method according to any one of the preceding claims.

The method according to the present invention provides advantages over known solutions are such as determining the speed of the electric motor which may then be indicated to the operator or to a safety system controlling the movement of the elevator car driven by the electric motor. The determined speed, when indicated to the operator, eases the control of the elevator car movement so that it becomes safe for the individuals inside the car. The risk of damaging the elevator also becomes lower. By determining the speed of the electric motor driving the elevator car, the safety system for limiting the speed automatically may be adopted. Various other advantages will become clear to a skilled person based on the following detailed description.

The expression "a number of" refers herein to any positive integer starting from one, e.g. to one, two, or three.

The expression "a plurality of" refers herein to any positive integer starting from two, e.g. to two, three, or four.

The terms "first" and "second" do not denote any order, quantity, or importance, but rather are used to distinguish one element from another.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

BRIEF DESCRIPTION OF FIGURES

The embodiments of the invention are illustrated by way of example, and not by way of limitation, in the figures of the accompanying drawings.

Figure 1 illustrates schematically an elevator with an elevator car driven by an electric motor and an electrical drive in connection with the electric motor in accordance with an embodiment of the present invention.

Figures 2A and 2B illustrate schematically flow diagrams of methods according to two embodiments of the present invention.

Figures 3A and 3B illustrate examples of an electrical drive utilizable in connection with the electric motor in accordance with an embodiment of the present invention.

Figures 4A, 4B and 4C illustrate schematically methods in accordance with embodiments of the present invention for forming an effective short-circuit of the electric motor.

Figure 5 illustrates torque $T$ and short-circuit current $I_{SC}$ as a function of speed of a permanent magnet motor at two temperatures of the motor winding, namely 20 °C and 120 °C.

Figure 6 illustrates schematically an elevator control unit 10 according to an embodiment of the present invention.

DESCRIPTION OF SOME EMBODIMENTS

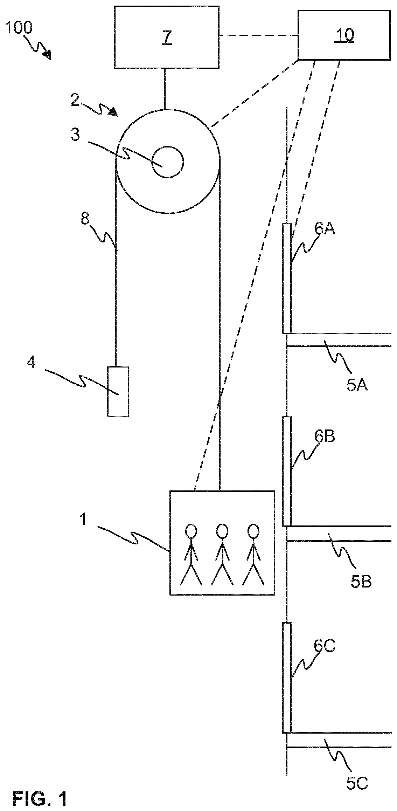

Figure 1 illustrates schematically an elevator 100 according to an embodiment of the present invention. The elevator 100 comprises an elevator car 1, an electric motor 2, namely a hoist motor 2, according to the embodiment shown in Fig. 1. The hoist motor 2 in Fig. 1 comprises a rotor 3. The elevator 100 may comprise a counterweight 4. The elevator 100 may further comprise an elevator control unit 10. The elevator 100 may also comprise an elevator shaft. Various landings 5A-5C are shown in the figure as well as the respective landing doors 6A-6C on each landing 5A-5C. There may also be an electrical drive 7 for controlling the operation of the electric motor 2. Controllable parameters may, preferably, be at least the rotational speed of the rotor 3, and the power fed/absorbed to/from the electric motor 2.

In an embodiment in Fig. 1, the elevator control unit 10 may be configured to control at least one of following: the operation of the electrical drive 7, the operation of the electric motor 2, the operation of the elevator car 1 including elevator car doors, the operation of the landing doors 6A-6C. The elevator control unit 10 may be part of an elevator controlling system.

According to an embodiment in Fig. 1 the elevator may also comprise a hoisting rope 8. The hoisting rope 8 may comprise, for example, steel or carbon fibers. The term 'hoisting rope' does not limit the form of the element anyhow. For example, the hoisting rope 8 may be implemented as a rope 8, a belt, or a track in ropeless or rope-free elevators.

According to an embodiment, the electric motor 2 may be, preferably, a permanent magnet motor such as a surface-mounted or an interior permanent magnet motor. The electric motor 2 may be a linear, radial, axial, or transverse type of a motor. A rotor of the permanent magnet motor has at least one permanent magnet providing magnetization of the rotor, i.e. excitation. In some embodiments, the electric motor 2 may be a synchronous motor comprising a magnetizing circuit or an exciter in connection with the rotor 3. According to another embodiment, the electric motor 2 may be a doubly-fed induction motor or an asynchronous slip ring motor capable of being excited externally via the slip ring, for example, via brushes or wirelessly such as by induction. The excitation may be provided by, for example, a permanent magnet or a battery-operated exciter. The excitation may be based on injecting direct current (DC) into a magnetization circuit of the rotor 3, thus magnetizing the rotor 3. In various embodiments, the exciter may be at least partly coupled to the rotor 3.

In an embodiment, the excitation of the rotor 3 is based on remanence or remanent magnetization. Remanence provides excitation of the rotor 3 even in conditions without other excitation described hereinearlier such as an exciter or permanent magnets in the rotor or DC injection into the excitation circuit. Conditions such as these may occur in cases of an electric motor other than a permanent magnet motor and when there is no power available for excitation, for example, in case of a power failure.

For situations in which there is a failure of a primary electrical power supply of the elevator 100, such as an electrical grid having, for example, a fundamental frequency of 50 or 60 Hz, the elevator 100 according to an embodiment may have a secondary electrical power supply. The secondary electrical power supply may be used to feed power to operate the electrical drive 7 as well as other components required to be operable during conditions without power available from the primary electrical power supply such as from the electrical grid or other primary electrical power source such as a gas turbine engine, an internal combustion engine or a fuel cell. Said other components may be, for example, part of the elevator controlling system, components of the elevator car 1, the magnetizing circuit or the exciter of the electric motor 2, or elements of the elevator shaft. The secondary electrical power supply may comprise a battery or battery bank or an internal combustion engine.

According to an embodiment, the elevator 100 may comprise a back-up energy supply system or an auxiliary energy storage system such as an internal combustion engine, a fuel cell, a flywheel, or a lead, nickel-cadmium, nickel-metal hybrid, lithium ion, or lithium polymer battery delivering a voltage of 12 V, 24 V or 48 V, or at least a connection to such as a system or systems if not part of the elevator 100. The back-up energy supply system or the auxiliary energy storage system may be used to operate the elevator 100, at least the necessary elements for bringing the elevator car 1 safely to a landing 5A-5C, such as the control unit 10. If the back-up energy supply system or the auxiliary energy storage system is insufficient for operating the electric motor 2 to drive the elevator car 1, the operator may manually operate a braking system in order to cause the movement of the elevator car 1.

In some embodiments, the back-up energy supply system or the auxiliary energy storage system may be used for excitation of the rotor 3. The back-up energy supply system or the auxiliary energy storage system may be for example a battery such as a lead, nickel-cadmium, nickel-metal hybrid, lithium ion, or lithium polymer battery delivering a voltage of 12 V, 24 V or 48 V, in connection with the electric motor 2 providing power to the magnetization circuit or the exciter. There may also be several batteries connected in series to produce higher voltage levels or in parallel to increase current injection capability of the whole battery bank. There may also be a converter such as a DC converter in connection with the magnetizing circuit or the exciter and the battery. The DC converter may be utilized to convert the voltage or current from the battery or battery bank to higher or lower level of voltage or current for the rotor 3.

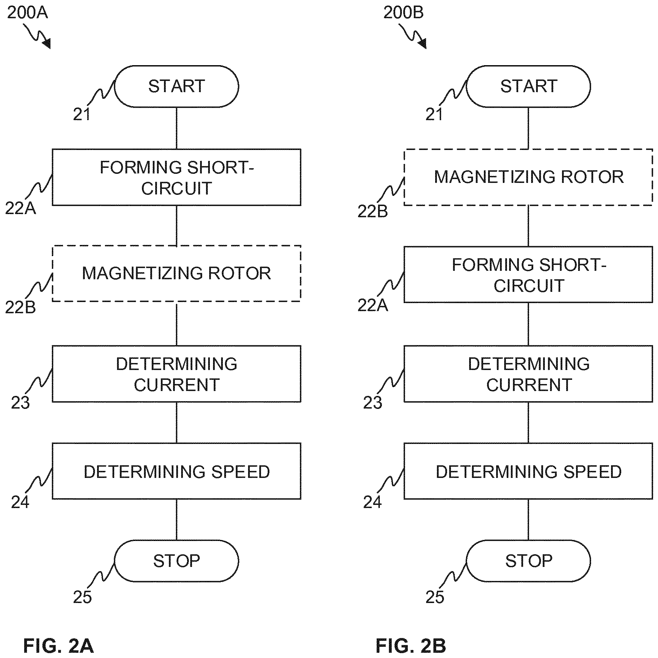

Figure 2A, at 200A, shows a flow diagram disclosing an embodiment of a method in accordance with the present invention.

Item 21 refers to a start-up phase of the method. A need for determining the speed of the electric motor, such as the rotational speed of the rotor 2, is established.

At 22A, the effective short-circuit is formed by, for example, one of the various ways described hereinafter such as by a switch 40 or with an electrical drive 7.

The "effective short-circuit" refers herein to a condition in which at least two phases for supplying electric current into the electric motor 2 are being short-circuited either directly through a zero or substantially zero-ohm connection or through a resistive component. The resistive component may have a substantially higher value of resistance, such as 50, 100, or 1000 ohms, than in case of a direct short-circuit through a zero- or substantially zero-ohm connection.

The "short-circuit current" refers herein to a current flowing in the effective short-circuit according to embodiments of the present invention.

At 22B, according to an embodiment wherein the electric motor 2 is a synchronous motor or a doubly-fed induction motor or an asynchronous slip ring motor enabling injecting current into the magnetization circuit of the rotor 3 of the electric motor 2. Steps 22A and 22B may also be performed at the opposite order as shown in Fig. 2B, at 200B.

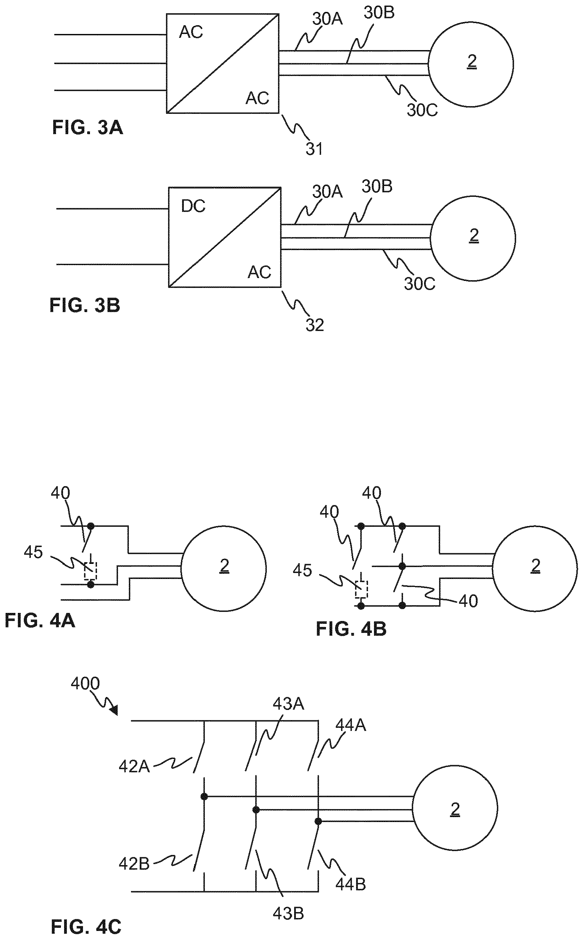

At 23, the short-circuit current is being determined by one of the various ways described hereinafter such as by a measurement of short-circuit current through the switch 40 or with the electrical drive 7 shown in Figs. 3 and 4. This step may also include digital signal processing, for example, for determining the fundamental frequency or amplitude of the short-circuit current.

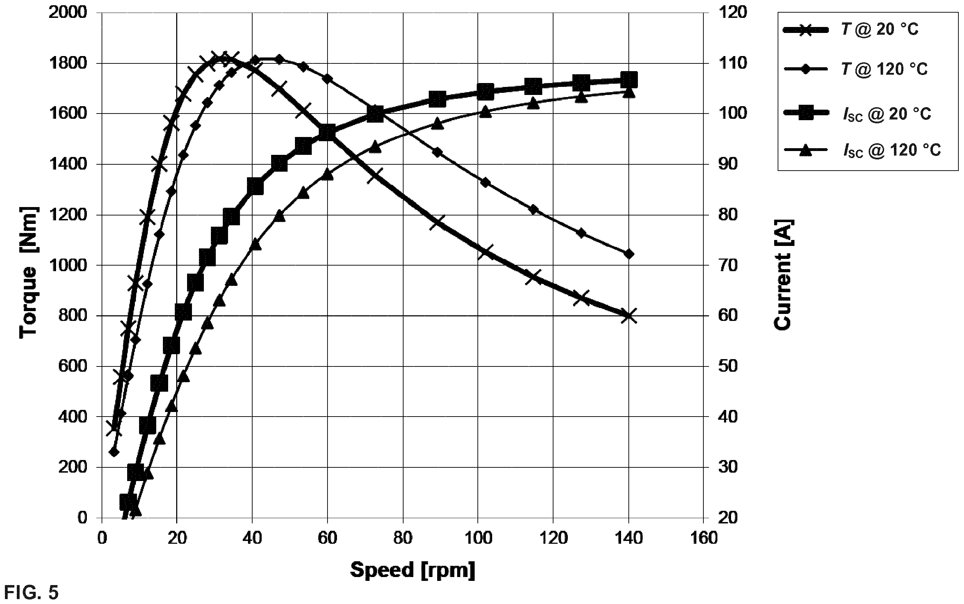

According to an embodiment, the speed of the electric motor 2 to be determined may be from 0 to 150 revolutions per minute. Advantageously, the speed of the electric motor 2 to be determined may be from 0 to 50 revolutions per minute. In an embodiment having a permanent magnet electric motor, the speed of the electric motor 2 may be from 0 revolutions per minute to a value corresponding the maximum short-circuit torque of the electric motor 2 (e.g. about 30 or 42 revolutions per minute as shown in Fig. 5). Advantageously, the speed to be determined may be from 0 revolutions per minute to twice the value corresponding the maximum short-circuit torque of the electric motor 2.

The short-circuit current refers herein to the current flowing in the effective short-circuit according to an embodiment of the present invention. The short-circuit current may be determined from any point or part of the effective short-circuit.

At 24, at least one characteristic of the short-circuit current is being utilized in determining the speed of the electric motor 2, namely the rotational speed of the rotor 3. This may include taking into account characteristics, such as the size, e.g. the radius, of the rotor 3, the pulley, or the driving sheave, or a gearing system, if any.

Method execution is ended at 25. The speed determination is no longer necessary or the controlling of the operation of the elevator 100 may be switched to another control mode. At 25, the controlling of the operation of the elevator 100 may be switched to another controlling device such as from an auxiliary controlling unit to the elevator control unit 10 according to an embodiment in which the determination of the speed is performed by the auxiliary controlling unit.

According to various embodiments, the determined speed may be used in various different applications for monitoring or determining the speed of the electric motor 2. According to an embodiment, the determined speed may be used for monitoring the speed of the electric motor 2 or the elevator car 1 in case of an emergency or a rescue situation. According to a preferable embodiment, the determined speed may be utilized in the elevator control unit 10 or an auxiliary controlling unit for overspeed protection/monitoring, solely or among other things.

According to an embodiment, the back-up energy supply or the auxiliary energy storage system which may be utilized in powering up the elevator 100, for example, at least the necessary parts or devices for determining the speed of the electric motor 2.

Figures 3A and 3B show two embodiments of the electrical drive 7 in connection with the electric motor 2. In Fig. 3A, a variable frequency drive 31 or a frequency converter 31 is shown which is capable of converting alternating current (AC) with a first frequency to AC with a second frequency. Fig. 3B illustrates an inverter 32 interfacing the electric motor 2. The variable frequency drive/frequency converter 31 or the inverter 32 may be used to control the operation of the electric motor 2, especially, the rotational speed of the rotor 3.

Figures 4A, 4B and 4C illustrate embodiments accordance with the present invention with which the effective short-circuit may be formed. There may be a switch 40 or three switches, or any two of the three switches, as shown in Figs. 4A and 4B which may be used to connect two or three or more phases supplying electrical power into the electric motor 2. Optionally, there may be a resistor 45 in series with the switch 40 or with at least one of the switches. By connecting the two phases or at least two phases, a short-circuit condition, that is an effective short-circuit, may be obtained.

According to an embodiment, the current through the switch 40 or at any other point of the effective short-circuit may be measured to determine the short-circuit current.

According to an embodiment, the effective short-circuit may be formed by connecting three of the plurality of phases of the electric motor 2. In case of a three-phase electric motor 2, this entails connecting all of the phases in short-circuit.

In some embodiments, the effective short-circuit may be formed by using the electrical drive 7. According to an embodiment in Fig. 4C, at 400, the electrical drive 7 is an inverter 32 or a motor side bridge of the variable frequency drive/frequency converter 31. The motor side bridge may be, e.g., a full bridge comprising high side switches 42A-44A and low-side switches 42B-44B as shown in Fig. 4C.

According to an embodiment, the short-circuit condition with two phases short-circuited may be formed by having, for example, switches 42A and 42B in Fig. 4C simultaneously closed while other switches remain open. The short-circuit current may then be determined by the electrical drive 7. Different combinations of the switches may also be used, for example, having switches 42A and 43A or 42A and 44A, depending on the type of the inverter 32, or even one high-side and one low-side switch, simultaneously closed. In the last-mentioned example, the effective short-circuit may be formed through an intermediate circuit of the electrical drive such as a frequency converter 31, a line side bridge or through an additional switch.

According to an embodiment, the effective short-circuit may be formed symmetrically by closing all of the high-side switches or all of the low-side switches. Symmetrical effective short-circuit with three phases, or all phases in case of a motor with more than three phases, short-circuited may also be formed via the intermediate circuit of the electrical drive 7 in which case any three or at least three switches of the motor side bridge may be closed. In addition, it may be necessary to close an additional switch in the intermediate circuit or the line side bridge of the frequency converter 31.

According to an embodiment, the resistor 45 may be a resistor with a known resistance value in series with the switch 40. The resistance value may be, for example, 50, 100, or 1000 ohms. The current through the switch 40 is then the short-circuit current. The short-circuit current may be determined by a measurement of the voltage over said resistor 45 with a known resistance value. Said current may then be used to determine the speed of the electric motor 2 when the effect of said resistor 45 with a known resistance value on said current and the operation of the electric motor 2 have been taken into account.

According to various embodiments, said current may be determined by a measurement device, for example, a Rogowski coil, a current probe, a current transformer, a Hall sensor, or a measurement resistor. Alternatively or in addition, there may be an integrated current sensor in the semiconductor switches 42A-44A, 42B-44B, shown in Figs. 4A-4C. The measurement device may also be integrated into the semiconductor module comprising at least two of the semiconductor switches 42A-44A, 42B-44B.

The frequency of the short-circuit current may be determined by Fourier-based methods. The frequency may be determined by several other methods such as by counting rising or falling edges of the short-circuit current or by counting zero crossings during a predetermined time period such as 10 milliseconds. Based on the number of rising edges, falling edges or zero crossings, the frequency may be determined. The frequency may also be determined based on the time period between two or a number of consecutive rising edges, falling edges or zero crossings, or between different events, such as between a rising edge and a falling edge.

The short-circuit current may be determined by the elevator control unit 10. Alternatively or in addition, the elevator 100 may comprise the auxiliary controlling unit for determining the short-circuit current. The auxiliary controlling unit may be arranged in connection with the switch 40. The auxiliary controlling unit may be capable of forming the effective short-circuit by controlling a switch 40.

The method according to an embodiment in Figs. 2A and 2B, may be performed by the elevator control unit 10. According to an embodiment, the method may be performed at least partially with the electrical drive 7 or by an auxiliary controlling unit. Furthermore, the method may be performed once, intermittently or continuously, depending, for example, on how often the information about the speed of the electric motor 2 is needed.

According to an embodiment, the short-circuit current may be provided, wirelessly or in a wired manner, to an external system with respect to the elevator for determining the at least one characteristic of the short-circuit current. The external system may then provide the information about the at least one characteristic of the short-circuit current to the elevator 100, such as to the elevator control unit 10 or the auxiliary controlling unit, according to an embodiment of the invention. The external system may be a handheld device utilizing wireless technology or an integrated device with a display arranged so that the operator may visually monitor the value of the at least one characteristic of the short-circuit current.

In various embodiments, the determination of the speed of the elevator car 1 is based on at least one characteristic of a short-circuit current of the electric motor 2. The characteristic may, for example, be a frequency, such as a fundamental frequency, or an amplitude, or both, of the short-circuit current of the electric motor 2.

In various embodiments, the speed of the elevator car 1 is determined based on the rotational speed of the rotor 3 of the electric motor 2, where the rotational speed may be determined by the at least one characteristic of the short-circuit current of the electric motor 2.

According to an embodiment, the speed of the elevator car 1 may be determined from the speed of the electric motor 2. The speed of the elevator car 1 may, particularly, be determined from the rotational speed of the rotor 3 of the electric motor 2 by taking into account the size, such as the radius, of the rotor 3, the pulley, or the driving sheave. In embodiments comprising, additionally or alternatively, a gear or gearing system, the effect of gearing on the speed of the elevator car 1 relative to the speed of the electric motor 2 should be taken into account.

In one embodiment, the speed of the elevator car 1 may also be determined directly from a table or a graph defining the relationship between the speed of the elevator car 1 and the at least on characteristic of the short-circuit current of the electric motor 2.

According to an embodiment, the speed of the electric motor 2 may be determined based on the frequency of the short-circuit current by a first equation

$$N = \frac{f_{\text{I,SC}}}{P},$$

wherein $N$ is the speed of the electric motor 2, $f_{\text{I,SC}}$ is the frequency of the short-circuit current, $P$ is the number of pole-pairs of the motor 2.

According to an embodiment, the speed of the electric motor 2 may be determined based on the amplitude of the short-circuit current in case of a symmetrical effective short-circuit, wherein the electric motor 2 may be one of various types of permanent magnet motors such as a surface-mounted and interior permanent magnet motor, by a second equation

$$N = N_{\text{NOM}} R \frac{I_{\text{d,SC}} + I_{\text{q,SC}}}{\sqrt{\frac{E^2}{3} - I_{\text{d,SC}}^2 X_{\text{d,SC}}^2 - I_{\text{q,SC}}^2 X_{\text{q,SC}}^2}},$$

wherein $N$ is the speed of the electric motor 2, $N_{\text{NOM}}$ is the nominal speed of the electric motor 2, $R$ is a winding resistance of the electric motor 2, $E$ is the root mean square (RMS) value of a phase-to-phase back electromotive force (EMF) of the electric motor 2 at the nominal speed of the motor 2, $I_{\text{d,SC}}$ is the RMS value of the direct (d)-axis component and $I_{\text{q,SC}}$ RMS value of the quadrature (q)-axis component of the short-circuit current of the electric motor 2, $X_{\text{d,SC}}$ and $X_{\text{q,SC}}$ are d- and q-axis components of the winding reactance of the electric motor 2 at the nominal rotational speed of the motor 2.

In case of various types of permanent magnet motors, the second equation may be used to take the effects of d- and q-axis components of the winding reactance into account separately. This may be done, for example, by weighting the d- and q-axis reactance differently in different operating conditions. The different operating conditions may be, for example, the rotational speed, loading or both effects combined of the electric motor 2.

According to an embodiment, the speed of the electric motor 2 may be determined based on the amplitude of the short-circuit current in case of a symmetrical effective short-circuit, wherein the electric motor 2 is a surface-mounted permanent magnet motor, by a third equation

$$N = N_{\text{NOM}} R \frac{I_{\text{SC}}}{\sqrt{\frac{E^2}{3} - I_{\text{SC}}^2 X^2}},$$

wherein $N$ is the speed of the electric motor 2, $N_{\text{NOM}}$ is the nominal speed of the electric motor 2, $R$ is a winding resistance of the electric motor 2, $E$ is the root mean square (RMS) value of a phase-to-phase back electromotive force (EMF) of the electric motor 2 at the nominal speed of the motor 2, $I_{\text{SC}}$ is the RMS value of the short-circuit current of the electric motor 2, $X$ is a winding reactance of the electric motor 2 at the nominal rotational speed of the motor 2. The third equation is a modified version of the second equation from which the d- and q-axis components of the winding reactance are assumed to be substantially equal ($X_{d,SS} \approx X_{q,SC}$), which is valid at least for some surface-mounted permanent magnet motors.

Value of at least one of $N_{NOM}$, $R$, $E$ and $X$ may be predetermined based on a nameplate of the electric motor and stored as (an) operating parameter(s) into, for example, the elevator control unit 10 or the auxiliary controlling unit.

In case of some surface-mounted permanent magnet motors, the reactance given in the nameplate may be used directly or with only a small modification in the third equation to determine to speed of the electric motor 2. The value given in the nameplate is typically close to a q-axis component of the winding reactance of the surface-mounted permanent magnet motor at least at low speeds of the electric motor 2.

According to an embodiment, the electrical drive 7 may be used to identify at least one of $R, E,$ or $X$. Identification may be performed, for example, by utilizing a parameter identification method such as the recursive least square method or the normalized projection algorithm.

Figure 5 illustrates the torque and the short-circuit current as a function of rotational speed of the rotor 3 of a permanent magnet motor at two temperatures 20 °C and 120 °C according to an embodiment of the present invention. The effect of temperature on the torque and the short-circuit current may clearly be seen. The difference in the short-circuit currents at different temperatures is small and may be neglected in some cases. The effect of temperature on the short-circuit current may also be compensated by determining the temperature of the motor winding. In some embodiments, the temperature of the motor winding may be determined by a measurement, for example, by a negative temperature coefficient (NTC) thermistor, an infrared measurement device or may be determined by using a mathematical model of the motor winding temperature executed, for example, in the elevator control unit 10 or the auxiliary controlling unit.

In an embodiment, the determined speed of the electric motor 2 or the elevator car 1 may be shown in a display visible for the operator while operating a braking system of the elevator 100. Additionally or alternatively, the speed information may be transmitted to a safety system in connection with the elevator 100 including, for example, overspeed monitoring. The safety system may automatically operate the braking system if the speed rises to or above the overspeed limit.

The method according to an embodiment of the present invention may be executed by a computer in connection with the electric motor 2, the elevator control unit 10, the auxiliary controlling unit or the electrical drive 7 comprising at least a processor and a memory. The steps of the method may be programmed to the memory, e.g. a non-transitory, computer readable medium, and executed by the processor, such as a (micro)processor. According to an embodiment, the method may at least partly be executed by a processor in the elevator control unit 10. According to another embodiment, the method may at least partly be performed by a processor in the electrical drive 7. In some embodiments, the method may be performed in a distributed manner by a plurality of processors such as partly by the processor in the electrical drive 7 and partly by the processor in the elevator control unit 10 and partly by the processor in the auxiliary controlling unit, or any combination thereof.

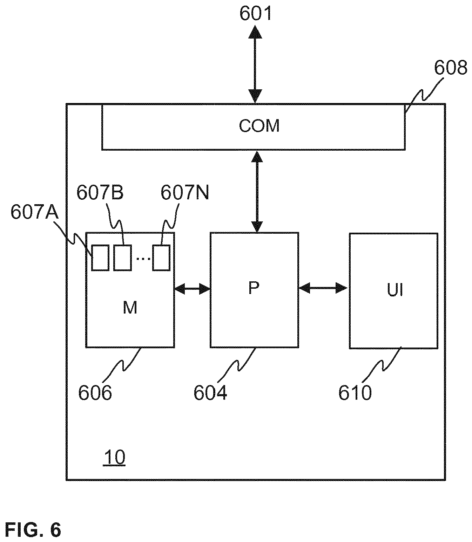

Figure 6 illustrates schematically an elevator control unit 10 according to an embodiment of the present invention. External units 601 may be connected to a communication interface 608 of the elevator control unit 10. External unit 601 may comprise wireless connection or a connection by a wired manner. The communication interface 608 provides interface for communication with external units 601 such as the elevator car 1, the electric motor 2, the landing doors 6A-6C, or the electrical drive 7 to the elevator control unit 10. There may also be connecting to the external system, such as a laptop or a handheld device. There may also be a connection to a database of the elevator 100 or an external database including information used in controlling the operation of the elevator 100.

The elevator control unit 10 may comprise one or more processors 604, one or more memories 606 being volatile or non-volatile for storing portions of computer program code 605A-605N and any data values and possibly one or more user interface units 610. The mentioned elements may be communicatively coupled to each other with e.g. an internal bus.

The processor 604 of the elevator control unit 10 is at least configured to implement at least some method steps as described. The implementation of the method may be achieved by arranging the processor 604 to execute at least some portion of computer program code 605A-605N stored in the memory 606 causing the processor 604, and thus the elevator control unit 10, to implement one or more method steps as described. The processor 604 is thus arranged to access the memory 606 and retrieve and store any information therefrom and thereto. For sake of clarity, the processor 604 herein refers to any unit suitable for processing information and control the operation of the elevator control unit 10, among other tasks. The operations may also be implemented with a microcontroller solution with embedded software. Similarly, the memory 606 is not limited to a certain type of memory only, but any memory type suitable for storing the described pieces of information may be applied in the context of the present invention.

The specific examples provided in the description given above should not be construed as limiting the applicability and/or the interpretation of the appended claims. Lists and groups of examples provided in the description given above are not exhaustive unless otherwise explicitly stated.

**Claims**

1. A method for determining a speed of an electric motor (2) of an elevator (100) comprising a plurality of phases (30A, 30B, 30C) for supplying electric current to the electric motor (2), the method comprising

   - forming an effective short-circuit between at least two of the plurality of phases (30A, 30B, 30C) of the electric motor (2), wherein, in the effective short-circuit, said at least two phases are short-circuited either directly through a zero or substantially zero-ohm connection or through a resistive component,
   - determining a short-circuit current, the short-circuit current being the current flowing in the effective short-circuit, **characterised in that,** the method comprises
   - determining the speed of the electric motor (2) based on at least one characteristic of the short-circuit current, wherein the characteristic is a frequency of the short-circuit current, or, wherein the electric motor (2) is a surface-mounted permanent magnet motor and the formed effective short-circuit is symmetrical, an amplitude of the short-circuit current and determining of the speed is according to equation

   $$ N = N_{\mathrm{NOM}} R \frac{I_{\mathrm{SC}}}{\sqrt{\frac{E^2}{3} - I_{\mathrm{SC}}^2 X^2}}, $$

   wherein $N$ is the speed of said motor (2), $N_{\mathrm{NOM}}$ is the nominal rotational speed of said motor (2), $R$ is a winding resistance of said motor (2), $E$ is the root mean square value of a phase-to-phase back electromotive force of said motor (2) at the nominal rotational speed of said motor (2), $I_{\mathrm{SC}}$ is the RMS value of the short-circuit current, $X$ is a winding reactance of said motor (2) at the nominal rotational speed of said motor (2).

2. The method according to claim 1, comprising forming the effective short-circuit between at least two of the plurality of phases (30A, 30B, 30C) of the electric motor (2) by an electrical drive (7) or a switch (40).

3. The method according to claim 2, comprising forming the effective short-circuit between at least two of the plurality of phases (30A, 30B, 30C) of the electric motor (2) by the switch (40) connected in series with a resistor (45) with a known resistance value so that current flows through the resistor (45) only when the switch (40) is closed.

4. The method according to any one of the preceding claims, comprising determining the short-circuit current by a measurement device in the electrical drive (7).

5. The method according to claim 3, comprising determining the short-circuit current by measuring a voltage across the resistor (45) with a known resistance value.

6. The method according to any one of the preceding claims, comprising, prior to determining the short-circuit current, magnetizing a rotor (3) of the electric motor (2).

7. The method according to any one of the preceding claims, comprising determining the speed of the electric motor (2) based on the frequency of the short-circuit current by equation

   $$ N = \frac{f_{\mathrm{I,SC}}}{P}, $$

   wherein $N$ is the speed of the electric motor (2), $f_{\mathrm{I,SC}}$ is the frequency of the short-circuit current, $P$ is the number of pole-pairs of the electric motor (2).

8. The method according to any one of the preceding claims, comprising determining the speed of the electric motor (2) based on an amplitude of the short-circuit current.

9. The method according to any one of the preceding claims, comprising determining at least one of the following: the amplitude or the frequency of the short-circuit current with the electrical drive (7).

10. The method according to any one of the preceding claims, comprising determining the speed of the electric motor (2) by an elevator control unit (10).

11. An elevator control unit (10) for determining a speed of an electric motor (2) of an elevator (100), the elevator control unit (10) comprising:

  - at least one processor (604), and
  - at least one memory (606) storing at least one portion of computer program code (605A-605N),

  wherein the at least one processor (604) being configured to cause the elevator control unit (10) at least to perform:

  - form an effective short-circuit between at least two of a plurality of phases (30A, 30B, 30C) supplying electric current to the electric motor (2), wherein, in the effective short-circuit, said at least two phases are short-circuited either directly through a zero or substantially zero-ohm connection or through a resistive component,
  - determine a short-circuit current, the short-circuit current being the current flowing in the effective short-circuit, **characterised in that,** the at least one processor (604) being further configured to cause the elevator control unit (10) to perform:
  - determine the speed of the electric motor (2) based on at least one characteristic of the short-circuit current, wherein the characteristic is a frequency of the short-circuit current, or, wherein the electric motor (2) is a surface-mounted permanent magnet motor and the formed effective short-circuit is symmetrical, an amplitude of the short-circuit current and determining of the speed is according to equation

$$N = N_{\mathrm{NOM}} R \frac{I_{\mathrm{SC}}}{\sqrt{\frac{E^2}{3} - I_{\mathrm{SC}}^2 X^2}},$$

  wherein $N$ is the speed of said motor (2), $N_{\mathrm{NOM}}$ is the nominal rotational speed of said motor (2), $R$ is a winding resistance of said motor (2), $E$ is the root mean square value of a phase-to-phase back electromotive force of said motor (2) at the nominal rotational speed of said motor (2), $I_{\mathrm{SC}}$ is the RMS value of the short-circuit current, $X$ is a winding reactance of said motor (2) at the nominal rotational speed of said motor (2).

12. A computer program product comprising program instructions which when executed by an elevator control unit according to claim 11 (10) cause the elevator control unit (10) to perform the method according to any one of the claims 1-10.

**Patentansprüche**

1. Verfahren zum Bestimmen einer Drehzahl eines Elektromotors (2) eines Aufzugs (100), mehrere Phasen (30A, 30B, 30C) zum Zuführen von elektrischem Strom zu dem Elektromotor (2) umfassend, wobei das Verfahren Folgendes umfasst:

  - Bilden eines effektiven Kurzschlusses zwischen mindestens zwei der mehreren Phasen (30A, 30B, 30C) des Elektromotors (2), wobei bei dem effektiven Kurzschluss die mindestens zwei Phasen entweder direkt durch eine Null- oder im Wesentlichen Null-Ohm-Verbindung oder durch eine Widerstandskomponente kurzgeschlossen werden,
  - Bestimmen eines Kurzschlussstroms, wobei der Kurzschlussstrom der Strom ist, der in dem effektiven Kurzschluss fließt, **dadurch gekennzeichnet, dass** das Verfahren Folgendes umfasst:

  - Bestimmen der Drehzahl des Elektromotors (2) basierend auf mindestens einer Eigenschaft des Kurzschlussstroms, wobei die Eigenschaft eine Frequenz des Kurzschlussstroms ist, oder, wobei der Elektromotor (2) ein auf die Oberfläche montierter Dauermagnetmotor ist und der gebildete effektive Kurzschluss symmetrisch ist, eine Amplitude des Kurzschlussstroms und das Bestimmen der Drehzahl gemäß folgender Gleichung erfolgt:

$$N = N_{\mathrm{NOM}} R \frac{I_{\mathrm{SC}}}{\sqrt{\frac{E^2}{3} - I_{\mathrm{SC}}^2 X^2}},$$

wobei $N$ die Drehzahl des Motors (2) ist, $N_{\mathrm{NOM}}$ die Solldrehzahl des Motors (2) ist, $R$ ein Wicklungswiderstand des Motors (2) ist, $E$ der Quadratmittelwert einer gegenelektromotorischen Kraft von Phase zu Phase des Motors (2) bei der Solldrehzahl des Motors (2) ist, $I_{\mathrm{SC}}$ der RMS-Wert des Kurzschlussstroms ist, $X$ ein Wicklungsblindwiderstand des Motors (2) bei der Nenndrehzahl des Motors (2) ist.

2. Verfahren nach Anspruch 1, das Bilden des effektiven Kurzschlusses zwischen mindestens zwei der mehreren Phasen (30A, 30B, 30C) des Motors (2) durch einen elektrischen Antrieb (7) oder einen Schalter (40) umfassend.

3. Verfahren nach Anspruch 2, das Bilden des effektiven Kurzschlusses zwischen mindestens zwei der mehreren Phasen (30A, 30B, 30C) des Motors (2) durch den Schalter (40) umfassend, der derart in Reihe mit einem Widerstand (45) mit einem bekannten Widerstandswert geschaltet ist, dass der Strom nur dann durch den Widerstand (45) fließt, wenn der Schalter (40) geschlossen ist.

4. Verfahren nach einem der vorhergehenden Ansprüche, das Bestimmen des Kurzschlussstroms durch ein Messgerät in dem elektrischen Antrieb (7) umfassend.

5. Verfahren nach Anspruch 3, das Bestimmen des Kurzschlussstroms durch Messen einer Spannung am Widerstand (45) mit einem bekannten Widerstandswert umfassend.

6. Verfahren nach einem der vorhergehenden Ansprüche, vor dem Bestimmen des Kurzschlussstroms das Magnetisieren eines Rotors (3) des Elektromotors (2) umfassend.

7. Verfahren nach einem der vorhergehenden Ansprüche, das Bestimmen der Drehzahl des Elektromotors (2) basierend auf der Frequenz des Kurzschlussstroms durch folgende Gleichung umfassend:

$$N = \frac{f_{\mathrm{I,SC}}}{P},$$

wobei $N$ die Drehzahl des Motors (2) ist, $f_{\mathrm{I,SC}}$ die Frequenz des Kurzschlussstroms ist, $P$ die Anzahl der Polpaare des Elektromotors (2) ist.

8. Verfahren nach einem der vorhergehenden Ansprüche, das Bestimmen der Drehzahl des Elektromotors (2) basierend auf einer Amplitude des Kurzschlussstroms umfassend.

9. Verfahren nach einem der vorhergehenden Ansprüche, das Bestimmen von mindestens einem des Folgenden umfassend: der Amplitude oder der Frequenz des Kurzschlussstroms mit dem elektrischen Antrieb (7).

10. Verfahren nach einem der vorhergehenden Ansprüche, das Bestimmen der Drehzahl des Elektromotors (2) durch eine Aufzug-Steuereinheit (10) umfassend.

11. Aufzug-Steuereinheit (10) zum Bestimmen einer Drehzahl eines Elektromotors (2) eines Aufzugs (100), wobei die Aufzug-Steuereinheit (10) Folgendes umfasst:

mindestens einen Prozessor (604) und
mindestens einen Speicher (606), der mindestens einen Teil von Computerprogrammcode (605A-605N) speichert,
wobei der mindestens eine Prozessor (604) dafür konfiguriert ist, die Aufzug-Steuereinheit (10) dazu zu veranlassen, mindestens Folgendes auszuführen:

- Bilden eines effektiven Kurzschlusses zwischen mindestens zwei der mehreren Phasen (30A, 30B, 30C), die dem Elektromotor (2) elektrischen Strom zuführen, wobei bei dem effektiven Kurzschluss die mindestens zwei Phasen entweder direkt durch eine Null- oder im Wesentlichen Null-Ohm-Verbindung oder durch eine Widerstandskomponente kurzgeschlossen werden,

- Bestimmen eines Kurzschlussstroms, wobei der Kurzschlussstrom der Strom ist, der in dem effektiven Kurzschluss fließt, **dadurch gekennzeichnet, dass** der mindestens eine Prozessor (604) ferner dafür konfiguriert ist, die Aufzug-Steuereinheit (10) dazu zu veranlassen, Folgendes auszuführen:

- Bestimmen der Drehzahl des Elektromotors (2) basierend auf mindestens einer Eigenschaft des Kurzschlussstroms, wobei die Eigenschaft eine Frequenz des Kurzschlussstroms ist, oder wobei der Elektromotor (2) ein auf die Oberfläche montierter Dauermagnetmotor ist und der gebildete effektive Kurzschluss symmetrisch ist, eine Amplitude des Kurzschlussstroms und das Bestimmen der Drehzahl gemäß folgender Gleichung erfolgt:

$$N = N_{\text{NOM}} R \frac{I_{\text{SC}}}{\sqrt{\frac{E^2}{3} - I_{\text{SC}}^2 X^2}},$$

wobei $N$ die Drehzahl des Motors (2) ist, $N_{\text{NOM}}$ die Solldrehzahl des Motors (2) ist, $R$ ein Wicklungswiderstand des Motors (2) ist, $E$ der Quadratmittelwert einer gegenelektromotorischen Kraft von Phase zu Phase des Motors (2) bei der Solldrehzahl des Motors (2) ist, $I_{\text{SC}}$ der RMS-Wert des Kurzschlussstroms ist, $X$ ein Wicklungsblindwiderstand des Motors (2) bei der Nenndrehzahl des Motors (2) ist.

12. Computerprogrammprodukt, Programmanweisungen umfassend, die bei Ausführung durch eine Aufzug-Steuereinheit (10) nach Anspruch 11 die Aufzug-Steuereinheit (10) dazu veranlassen, das Verfahren nach einem der Ansprüche 1 bis 10 auszuführen.

**Revendications**

1. Procédé pour déterminer une vitesse d'un moteur électrique (2) d'un ascenseur (100) comprenant une pluralité de phases (30A, 30B, 30C) pour fournir un courant électrique au moteur électrique (2), le procédé comprenant :

- la formation d'un court-circuit effectif entre au moins deux de la pluralité de phases (30A, 30B, 30C) du moteur électrique (2), dans le court-circuit effectif, lesdites au moins deux phases étant court-circuitées soit directement par une connexion de zéro ou sensiblement zéro Ohm soit par une composante résistive,
- la détermination d'un courant de court-circuit, le courant de court-circuit étant le courant circulant dans le court-circuit effectif, **caractérisé en ce que** le procédé comprend :

- la détermination de la vitesse du moteur électrique (2) sur la base d'au moins une caractéristique du courant de court-circuit, la caractéristique étant une fréquence du courant de court-circuit, ou, le moteur électrique (2) étant un moteur à aimant permanent monté en surface et le court-circuit effectif formé étant symétrique, une amplitude du courant de court-circuit et la détermination de la vitesse étant selon l'équation :

$$N = N_{\text{NOM}} R \frac{I_{\text{SC}}}{\sqrt{\frac{E^2}{3} - I_{\text{SC}}^2 X^2}},$$

$N$ étant la vitesse dudit moteur (2), $N_{\text{NOM}}$ étant la vitesse de rotation nominale dudit moteur (2), $R$ étant une résistance d'enroulement dudit moteur (2), $E$ étant la valeur quadratique moyenne d'une force électromotrice de retour phase à phase dudit moteur (2) à la vitesse de rotation nominale dudit moteur (2), $I_{\text{SC}}$ étant la valeur RMS du courant de court-circuit, $X$ étant une réactance d'enroulement dudit moteur (2) à la vitesse de rotation nominale dudit moteur (2).

2. Procédé selon la revendication 1, comprenant la formation du court-circuit effectif entre au moins deux de la pluralité de phases (30A, 30B, 30C) du moteur électrique (2) par un entraînement électrique (7) ou un commutateur (40).

3. Procédé selon la revendication 2, comprenant la formation du court-circuit effectif entre au moins deux de la pluralité de phases (30A, 30B, 30C) du moteur électrique (2) par le commutateur (40) connecté en série avec une résistance (45) ayant une valeur de résistance connue de sorte que le courant ne traverse la résistance (45) que lorsque le commutateur (40) est fermé.

4. Procédé selon l'une quelconque des revendications précédentes, comprenant la détermination du courant de court-circuit par un dispositif de mesure dans l'entraînement électrique (7).

5. Procédé selon la revendication 3, comprenant la détermination du courant de court-circuit en mesurant une tension à travers la résistance (45) avec une valeur de résistance connue.

6. Procédé selon l'une quelconque des revendications précédentes, comprenant, avant la détermination du courant de court-circuit, la magnétisation d'un rotor (3) du moteur électrique (2).

7. Procédé selon l'une quelconque des revendications précédentes, comprenant la détermination de la vitesse du moteur électrique (2) sur la base de la fréquence du courant de court-circuit selon l'équation :

$$N = \frac{f_{\mathrm{I,SC}}}{P},$$

$N$ étant la vitesse du moteur électrique (2), $f_{\mathrm{I,SC}}$ étant la fréquence du courant de court-circuit, $P$ étant le nombre de paires de pôles du moteur électrique (2).

8. Procédé selon l'une quelconque des revendications précédentes, comprenant la détermination de la vitesse du moteur électrique (2) sur la base d'une amplitude du courant de court-circuit.

9. Procédé selon l'une quelconque des revendications précédentes, comprenant la détermination d'au moins un des éléments suivants : l'amplitude ou la fréquence du courant de court-circuit avec l'entraînement électrique (7).

10. Procédé selon l'une quelconque des revendications précédentes, comprenant la détermination de la vitesse du moteur électrique (2) par une unité de commande d'ascenseur (10).

11. Unité de commande d'ascenseur (10) pour déterminer une vitesse d'un moteur électrique (2) d'un ascenseur (100), l'unité de commande d'ascenseur (10) comprenant :

- au moins un processeur (604), et
- au moins une mémoire (606) stockant au moins une partie du code de programme informatique (605A-605N), l'au moins un processeur (604) étant configuré pour faire fonctionner l'unité de commande d'ascenseur (10) au moins pour réaliser :

- la formation d'un court-circuit effectif entre au moins deux d'une pluralité de phases (30A, 30B, 30C) fournissant un courant électrique au moteur électrique (2), dans le court-circuit effectif, lesdites au moins deux phases étant court-circuitées soit directement par une connexion de zéro ou sensiblement zéro Ohm soit par une composante résistive,
- la détermination d'un courant de court-circuit, le courant de court-circuit étant le courant circulant dans le court-circuit effectif, **caractérisée en ce que** l'au moins un processeur (604) est en outre configuré pour faire fonctionner la commande d'ascenseur (10) pour réaliser :

- la détermination de la vitesse du moteur électrique (2) sur la base d'au moins une caractéristique du courant de court-circuit, la caractéristique étant une fréquence du courant de court-circuit, ou, le moteur électrique (2) étant un moteur à aimant permanent monté en surface et le court-circuit effectif formé étant symétrique, une amplitude du courant de court-circuit et la détermination de la vitesse étant selon l'équation :

$$N = N_{\mathrm{NOM}} R \frac{I_{\mathrm{SC}}}{\sqrt{\frac{E^2}{3} - I_{\mathrm{SC}}^2 X^2}},$$

$N$ étant la vitesse dudit moteur (2), $N_{\mathrm{NOM}}$ étant la vitesse de rotation nominale dudit moteur (2), $R$ étant une résistance d'enroulement dudit moteur (2), $E$ étant la valeur quadratique moyenne d'une force électromotrice de retour phase à phase dudit moteur (2) à la vitesse de rotation nominale dudit moteur (2), $I_{SC}$ étant la valeur RMS du courant de court-circuit, $X$ étant une réactance d'enroulement dudit moteur (2) à la vitesse de rotation nominale dudit moteur (2).

12. Produit de programme informatique comprenant des instructions de programme qui, lorsqu'elles sont exécutées par une unité de commande d'ascenseur (10) selon la revendication 11, amènent l'unité de commande d'ascenseur (10) à réaliser le procédé selon l'une des revendications 1-10.

**FIG. 1**

FIG. 2A                              FIG. 2B

FIG. 3A

FIG. 3B

FIG. 4A

FIG. 4B

FIG. 4C

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090167218 A1
- CN 101780906 B